# EUROPEAN PATENT APPLICATION

(11) **EP 1 176 441 A2**
(43) Date of publication of application: **30.01.2002**
(21) Application number: 01116657.6
(22) Date of filing: 13.07.2001
(51) Int. Cl.: G02B 6/38

(54) **Multifiber optical array ferrule arrangement**

(30) Priority: 25.07.2000 US 624651
(71) Applicant: F.C.I. - Framatome Connectors International, 92400 Courbevoie (FR)
(72) Inventor: Cowley, Simon S., Mechanicsburg, PA 17055 (US); Ngo, Hung Viet, Harrisburg, PA 17112 (US)
(74) Representative: Beetz & Partner Patentanwälte

(57) **Abstract**

A multifiber optical array ferrule arrangement comprising a first chip substrate (25) having a plurality of first grooves (24) in one surface (26) thereof, each of the first grooves (24) adapted to allow an optical fiber (27) to be located therein; a second chip substrate (28) having a plurality of second grooves (24) in one surface (30) thereof, each of the second grooves (24) adapted to allow the optical fiber (27) to be located therein; and a third chip substrate (31) positioned between the first (25) and the second substrates (28) such that the optical fibers (27) that are positioned in the grooves (24) lie in contact with both the third chip substrate (31) and either the first (25) or second chip substrates (28).

## Description

The present invention relates to optical fiber connectors, and more particularly to an improved ferrule structure for use in an optical fiber connector, in one embodiment the ferrule structure provides an arrangement for increased optical fiber density by allowing the relatively close placement of two rows of optical fibers in the ferrule. In another embodiment, the ferrule structure provides three points of contact to the optical fibers placed therein.

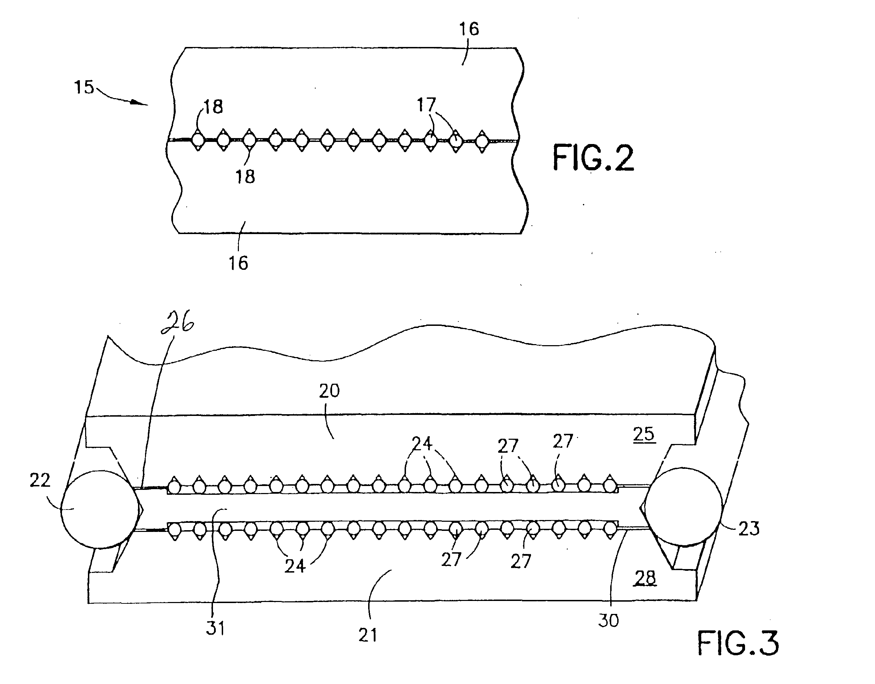

A typical known physical arrangement of optical fibers in a ferrule structure for fiber optical connectors is illustrated in Fig. 2 of this application. However, this type of arrangement limits the size of the optical connector, i.e. prevents one from manufacturing optical connectors which are smaller than known optical connectors and at the same time have an equal or even greater number of optical paths, i.e. number of optical fibers, therein. Examples of various known arrangements of optical fibers in ferrule structures are illustrated in U.S. Patent Nos. 4,046,454, 4,142,776, 4,657,338, 4,830,456, 5,123,073, 5,432,585, 5,689,599, 5,717,803, 5,815,621, 5,862,281, 5,933,564 and 5,611,017. Conventional silicon ferrule structures use two V-grooved chips, which when placed against each other, form a four sided groove for the optical fiber. An embodiment of the present invention employs a third chip placed between the two original chips. This third chip has planar surfaces so that the chip material contacts each optical fiber at three separate points.

A basic advantage of the present invention over conventional configurations is that the present invention provides a ferrule arrangement for a fiber optical connector which allows for increased optical fiber density by allowing for the placement of several rows, i.e. at least two, of optical fibers in the connector.

Another basic advantage of the present invention is enabling optical connectors to increase the number of optical paths therein. Still another advantage of the present invention is the ability to decrease the size of existing optical connectors while at the same time increasing the amount of optical paths in the connector.

In accordance with one embodiment of the present invention a multifiber optical array ferrule arrangement for an optical connector is provided comprising a first chip substrate having a plurality of first grooves in one surface thereof, each of the first grooves adapted to allow an optical fiber to be located therein; a second chip substrate having a plurality of second grooves in one surface thereof, each of the second grooves adapted to allow an optical fiber to be located therein; and a third chip substrate positioned between the first and the second substrates such that each of the optical fibers that are positioned in the grooves lies in contact with both the third chip substrate and either the first or second chip substrates.

In accordance with another embodiment of the present invention a multifiber array connector for optical fibers is provided including a ferrule arrangement comprising a first chip substrate having a plurality of first grooves in one surface thereof, each of the first grooves adapted to allow an optical fiber to be located therein; a second chip substrate having a plurality of second grooves in one surface thereof, each of the second grooves adapted to allow an optical fiber to be located therein; and a third chip substrate positioned between the first and the second substrates such that each of the optical fibers that are positioned in the grooves lies in contact with both the third chip substrate and either the first or second chip substrates.

Still another embodiment of the present invention comprises a multifiber optical array ferrule arrangement including a first chip substrate having a plurality of first grooves in one surface thereof, each of the first grooves adapted to allow an optical fiber to be located therein; a second chip substrate having a plurality of second grooves in one surface thereof, each of the second grooves adapted to allow an optical fiber to be located therein; the first and second grooves being positioned opposite and in alternating positions with respect to each other such that each of the optical fibers that are positioned in the grooves lies in contiguous contact with three separate points of contact with chip substrate.

The foregoing aspects and other features of the present invention are explained in the following description, taken in connection with the accompanying drawings, wherein:
Fig. 1 is a perspective view of a portion of a conventional optical connector assembly;
Fig. 2 is a cross sectional view of a conventional fiber optic array in a ferrule housing; and
Fig. 3 is a perspective view of one embodiment of a ferrule arrangement for a fiber optical connector employing the features of the present invention; and
Fig. 4 is a perspective view of another embodiment of a ferrule arrangement for a fiber optical connector employing the features of the present invention.

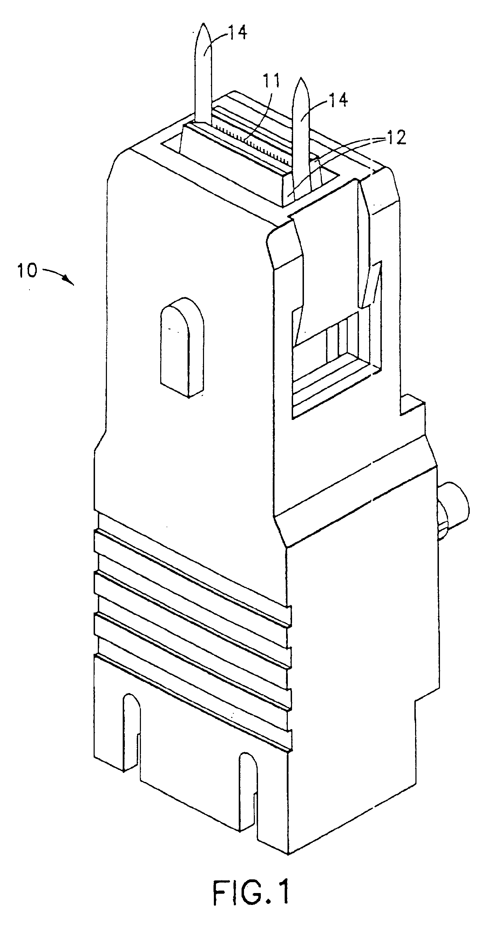

Referring to Fig. 1, there is shown a perspective view of an example of an optical fiber connector 10 which employs a ferrule housing and therefore which can incorporate the features of the present invention. Although the present invention will be described with reference to the embodiments shown in the drawings, it should be understood that the present invention can be embodied in many alternate forms of embodiments. In addition, any suitable size, shape or type of elements or materials could be used.

The connector 10 illustrated in Fig. 1 generally comprises a subassembly and a connector housing. The subassembly generally comprises the end of the fibers 11, a ferrule housing 12, a locator and guide pins 14. The connector housing generally comprises a coupling body, a coupling sleeve, a carrier sleeve, and an end sleeve. A similar connector housing is described in U.S. Patent No. 5,828,805. However, in alternate embodiments many different suitable types of connector housings adapted with a ferrule structure could be provided.

Referring now to Fig. 2 a conventional ferrule 15 is shown as comprising two silicon members or locator members 16. In the embodiment illustrated the silicon members 16 are substantially identical to each other, but orientated in reverse mirror positions relative to each other.

In alternate embodiments more or less than two silicon members could be provided, and they could have different shapes from each other. In other alternate embodiments the silicon member 16. could be comprised of additional or alternative materials, such as plastic, crystal, glass, ceramic or silica material.

A preferred method of manufacturing the ferrule employed in the present invention are known lithography techniques. In particular, a single substrate or wafer of silicon is used to make a plurality of the ferrules, such as fifty from a 10 cm wafer. Any suitable type of forming processing could be used to form the locator members out of a suitable substrate such as vapor disposition etching, plasma etching, or photo etching. In addition to the ability to form a batch of the ferrules at a same time from a single substrate, the forming process can also make the dimensions and shape of the locator members with very precise and small tolerances, such as ± 1 micron or less.

In forming an end of an optical connector a portion of the material surrounding optical fibers 17 is removed from the ends thereof. The exposed fibers are preferably sandwiched between two ferrule members. More particularly, the ends of the fibers 17 are located in opposing grooves or preferably "V" shaped slots 18 or grooves or channels, etc. The ferrule members are paired, then inserted into a receiving area. A ferrule housing (not shown) wedges the ferrule members 16 towards each other to hold the subassembly together. Preferably, once chips or ferrule members are placed in a housing, fibers 17 are inserted into openings formed by the grooves in the ferrule members. Fibers 17, ferrule members 16 and the housing are then bonded together, for example, by use of epoxy. However, any suitable means could be used to attach the various components together. Subsequently, the face of the sub-assembly is polished. The fibers can, for example, have a centerline spacing of 0.250mm.

The ferrule housing is preferably a one-piece member preferably comprised of molded polymer material. Preferably the polymer material is resiliently deflectable. However, in alternate embodiments the ferrule housing could be comprised of multiple members and/or any suitable material or forming process could be used.

Fig. 3 illustrates one embodiment of a basic ferrule arrangement for a fiber optic connector employing the features of the invention as described in this application. Specifically, there is shown a first and a second ferrule member 20 and 21 respectively. Also shown are guide pins 22 and 23 that may be inserted within another component of the optical connector. If a female or a hermaphroditic connector is desired, then one or zero guide pins, respectively, could be used. Both the first ferrule member 20 and the second ferrule member 21 are made of a chip material, preferably silicon, and also include in one surface a plurality of grooves, preferably V-grooves 24. Specifically in accordance with the features of the present invention, a ferrule arrangement as illustrated in Fig. 3 comprises a first chip substrate 25 having a plurality of first grooves, preferably V-grooves 24, on one surface 26. Each V-groove 24 allows an optical fiber 27 to be placed therein so that there is contact with two points of the chip substrate 25 i.e. on both sides of the V shape. A second chip substrate 28 includes a plurality of grooves, preferably V-grooves 24 on one surface 30. Each of the grooves in the second set of V-grooves 24 located on surface 30 also include an optical fiber 27 located therein in a manner so that there is contact with two points of the chip substrate 28, i.e. on both sides of each V shape. In accordance with a feature of the present invention a third chip substrate 31, also preferably silicon, is in a sandwich position between chip substrate 25 and chip substrate 28 as illustrated in Fig. 3. The edges of the third substrate 31 (i.e. the edges abutting pins 22, 23) are positioned to be coplanar with edges of both the first substrate 25 and also the second substrate 28. The third chip is preferable sized (i.e. its thickness), to space the two rows of fibers at the same pitch as the fibers within a row of fibers. In the arrangement discussed above, third chip 31 separates the rows of fibers approximately 0.250 mm or less.

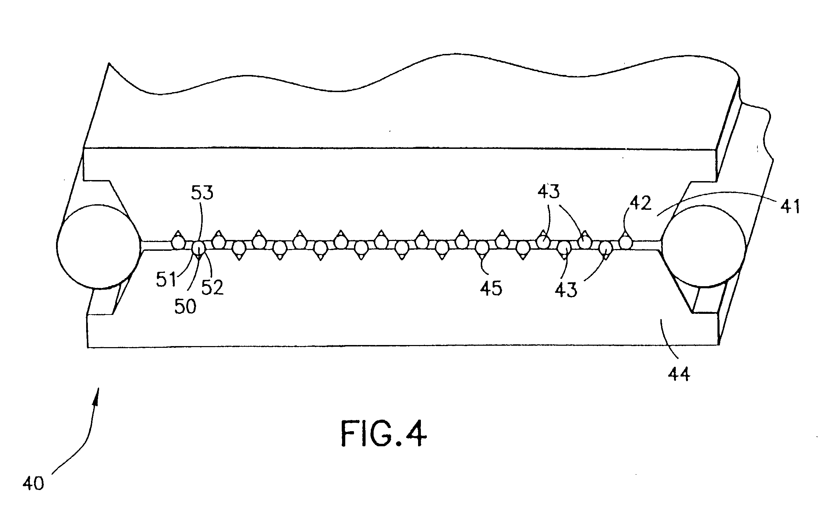

In the embodiment of the present invention as shown in Fig. 4 there is illustrated a multifiber optical array ferrule arrangement which in accordance with the features of the present invention permits increasing the optical fiber density by allowing the relatively close placement of two rows of optical fibers in a ferrule arrangement as described herein, while at the same time allowing each optical fiber to have three separate points of contiguous contact with chip substrate. Specifically, and as illustrated in Fig. 4, there is shown a multifiber optical array ferrule arrangement 40 including a first chip substrate 41 having a plurality of first grooves 42 in one surface thereof, each of the grooves 42 adapted to allow an optical fiber 43 to be located therein. The multifiber optical array ferrule arrangement 40 includes a second chip substrate 44 having a plurality of second grooves 45 in one surface thereof each also adapted to allow an optical fiber 43 to be located therein. As illustrated, the first grooves 42 and the second grooves 45 are both preferably V-grooves. These grooves are positioned on chip substrates 41 and 44 in such a manner that when substrates 41 and 44 face one another, fibers 43 on each substrate are positioned to face one another in alternating grooves on their respective chip substrates such that each of the optical fibers 43 that are positioned in each of the grooves 42 and grooves 45 lie in contiguous contact with three separate points of contact of the chip substrates. For example, fiber 50 lies in contiguous contact with chips 41 and 44 at points 51, 52 and 53. Furthermore, in view of the alternating arrangement of the fibers 43 on the chip substrates 41 and 44, when the substrates face each other as illustrated in Fig. 4, a basic advantage of the present invention is achieved, i.e., a ferrule arrangement for a fiber optical connector that allows for increased optical fiber density and therefore increase in the number of optical paths in the connector while decreasing the overall size of the optical connector.

In addition, the three (3) separate and distinct points of contact between the optical fibers and the ferrule structure force each of the fibers into the grooves within which the fibers are positioned without any side bias forces. In accordance with the preferred features of the present invention the chip substrates (or ferrule members) are made of a chip material such as, for example, silicon.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A multifiber optical array ferrule arrangement comprising a first chip substrate (25) having a plurality of first grooves (24) in one surface ((26) thereof, each of said first grooves (24) adapted to allow an optical fiber (27) to be located therein; and a second chip substrate (28) having a plurality of second grooves (24) in one surface (30) thereof, each of said second grooves (24) adapted to allow another optical fiber (27) to be located therein;
**characterized in** a third chip substrate (31) positioned between said first (25) and said second substrates (28) such that said optical fibers (27) that are positioned in said grooves (24) lie in contact with both said third chip substrate (31) and either said first chip substrate (25) or said second chip substrate (28).

2. A ferrule arrangement according to claim 1 wherein each of the said chip substrates (25, 28, 31) are silicon.

3. A ferrule arrangement according to claim 1 or 2 wherein each of said grooves (24) in said first (25) and second substrates (28) are V-grooves.

4. A ferrule arrangement according to claim 3 wherein each optical fiber (27) lies in contiguous relation to two surfaces of each of said V-grooves.

5. A ferrule arrangement according to claim 1, 2, 3 or 4 wherein each of said optical fibers (27) has contact with chip material at three points of contact.

6. A ferrule arrangement according to claim 1, 2, 3, 4 or 5 wherein said ferrule comprises at least two of layered sandwich type configurations as formed by the first chip substrate (25) and the third chip substrate (31) as well as the second chip substrate (28) and the third chip substrate (31) .

7. A multifiber optical array ferrule arrangement comprising a first chip substrate (41) having a plurality of first grooves (42) in one surface thereof, each of said first grooves adapted to allow an optical fiber (43) to be located therein; a second chip substrate (44) having a plurality of second grooves (45) in one surface thereof, each of said second grooves (45) adapted to allow an optical fiber (43, 50) to be located therein,
**characterized in that** said first (42) and second grooves (45) being positioned opposite and in alternating positions with respect to each other such that each of said optical fibers (43, 50) that are positioned in said grooves (42, 45) lies in contiguous contact with three points (51, 52, 53) of contact with said chip substrates (41, 44).

8. A ferrule arrangement according to claim 7 wherein each of the said chip substrates (41, 44) are silicon.

9. A ferrule arrangement according to claim 7 or 8 wherein each of said grooves (43, 50) in said first (41) and second chip substrates (44) are V-grooves.

10. A ferrule arrangement according to claim 9 wherein each optical fiber (43, 50) lies in contiguous relation to two surfaces of each of said V-grooves.

11. A multifiber optical array ferrule arrangement comprising a first chip substrate (25, 41) having a plurality of grooves (24, 42) adapted to allow an optical fiber (27, 43) to be located therein; and a second chip substrate (31, 44),
**characterized in that** said optical fiber has contact with chip material at three points (51, 52, 53) of contact.

12. A ferrule arrangement according to claim 11 wherein each of the said chip substrates are silicon.

13. A ferrule arrangement according to claim 11 or 12 wherein each of said grooves (24, 42) in said first substrate (25, 41) are V-grooves.

14. A ferrule arrangement according to claim 13 wherein each optical fiber (27, 43) lies in contiguous relation to two surfaces (51, 52) of each of said V-grooves.

15. A connector (10) comprising a multifiber optical array ferrule arrangement according to one of the foregoing claims.
